# EUROPÄISCHE PATENTANMELDUNG

(11) **EP 2 299 376 A1**
(43) Veröffentlichungstag der Anmeldung: **23.03.2011**
(21) Anmeldenummer: 10177698.7
(22) Anmeldetag: 20.09.2010
(51) Int. Cl.: G06F 17/50

(54) **Verfahren zum Umschalten von heterogenen Simulationsmodellen zur Laufzeit**

(30) Priorität: 18.09.2009 AT 14792009
(71) Anmelder: Kompetenzzentrum- das Virtuelle Fahrzeug Forschungsgesellschaft mbH (VIF), 8010 Graz (AT); Technische Universität Graz, 8010 Graz (AT); Cisc Semiconductor Design+Consulting Gmbh, 9020 Klagenfurt (AT)
(72) Erfinder: Steger, Christian, A-8045, Graz (AT); Karner, Michael, A-8200, Hofstätten/Raab (AT); Armengaud, Eric, A-8045, Graz (AT)
(74) Vertreter: Margotti, Herwig Franz

(57) **Zusammenfassung**

Diese Erfindung beschreibt ein Verfahren, um zur Laufzeit zwischen verschiedenen Simulationsebenen für dieselbe Komponente umzuschalten und dadurch die Simulationseffizienz der Co-Simulationsumgebung zu steigern. Die Beschreibung der jeweiligen Komponente erfolgt in mehreren Simulationsebenen, welche in einer geeigneten Hardwarebeschreibungssprache und auf einer geeigneten Abstraktionsebene modelliert sind. Eine für die Simulation verwendete Komponente kann dabei in verschiedenen Hardwarebeschreibungssprachen und auf verschiedenen Abstraktionsebenen implementiert werden. Diese Erfindung kombiniert damit die Möglichkeit, auf hoher Abstraktionsebene (z.B. Systemebene) lange simulierbare Zeiten zu erzielen mit der Möglichkeit, für einen definierten Abschnitt der simulierten Zeit die hohe Genauigkeit eines auf tiefer Ebene (z.B. physikalische Ebene) realisierten Simulationsmodells erzielen zu können. Der Hauptvorteil dieser Erfindung ist die Möglichkeit, die Simulation in Intervalle hoher Genauigkeit und Intervalle mit niedriger Genauigkeit einzuteilen.

## Beschreibung

Für Embedded Systems (Eingebettete Systeme) ist die Verhaltenssimulation auf Systemebene (d.h. auf Ebene des gesamten Systems inkl. Informationsverarbeitung und Umwelt des Systems) ein wichtiger Schritt, um sowohl die interne funktionale Architektur des Systems als auch die Schnittstellen zwischen den Komponenten des Systems (d.h. SubSysteme des Gesamtsystems, in der Literatur auch Modul genannt) zu validieren. Dafür werden typischerweise abstrakte Modelle der einzelnen Komponenten verwendet. Diese high-level Modelle abstrahieren allerdings unter Umständen ein bestimmtes Modellverhalten, welches das komplette System beeinflussen kann und die Realität nur schlecht abbildet. Eine besondere Herausforderung ist es, bereits in einem frühen Stadium der Entwicklung ausgewählte Komponenten durch besonders detaillierte Verhaltensmodelle (d.h. ein Modell, welches wesentliche Aspekte des Verhaltens einer Komponente abbildet) darzustellen, um damit schon früh mit ausreichender Genauigkeit die gesamte Systemarchitektur validieren zu können. Unter Verhaltensmodellierungssprachen ist in diesem Zusammenhang allgemein eine Beschreibungssprache (z.B. Hardwarebeschreibungssprache wie SystemC, SystemC-AMS, VHDL-AMS aber auch Softwarebeschreibungssprache wie C/C++) des Verhaltens von Komponentenmodellen zu verstehen. Verhaltensmodellierungssprachen ermöglichen die Dokumentation, die Modellierung, die Simulation, den Entwurf und die Herstellung von Systemen.

Auf Systemebene liegt das Hauptaugenmerk auf einer kurzen Simulationszeit (hohe Simulationsgeschwindigkeit) um eine lange simulierte Zeit (Zeitintervall unter Beobachtung) zu erzielen. Auf physikalischer Ebene, auf der die elektrischen und mechanischen Eigenschaften des Systems modelliert werden (z.B. Signalpegel, Kontakte) mit diversen komplexen analogen Komponenten dagegen sind die Simulationszeiten wesentlich länger. Die Anforderungen der verschiedenen Ebenen an die Simulationsmodelle widersprechen sich also: Eine simulierte Zeit von mehreren Sekunden oder Minuten auf Systemebene kann nicht mittels low-level physikalischen Modellen erreicht werden. In diesem Fall würden sich enorme Simulationszeiten ergeben und die Simulation könnte nicht bzw. nicht in einer vernünftigen Zeit abgeschlossen werden. Auf der anderen Seite sind die simulierten Zeiten, die mit Modellen auf physikalischer Ebene erreichbar sind (z.B. einige Millisekunden), deutlich zu kurz für das abstrakte Modell auf Systemebene. In diesen kurzen Zeiträumen geschieht auf Systemebene möglicherweise überhaupt nichts, was die Simulation auf Systemebene nutzlos machen würde.

Ein möglicher Lösungsansatz für diese Problematik ist Hardware/Software Co-Simulation. Bei der Co-Simulation kann der Entwickler unterschiedliche Teile des Systems mit unterschiedlichen Verhaltensmodellierungssprachen bzw. auf unterschiedlichen Abstraktionsebenen modellieren und in einer gemeinsamen Co-Simulation simulieren. Die Festlegung des Simulationsmodells für eine Komponente geschieht statisch vor der Simulation, und das Modell kann nicht während der Simulation geändert werden.

Diese Erfindung beschreibt ein Verfahren, um zur Laufzeit zwischen verschiedenen Simulationsebenen für dieselbe Komponente umzuschalten und dadurch die Simulationseffizienz der Co-Simulationsumgebung zu steigern. Die Beschreibung der jeweiligen Komponente erfolgt in mehreren Simulationsebenen, welche in einer geeigneten Verhaltensmodellierungssprache und auf einer geeigneten Abstraktionsebene modelliert sind. Eine für die Simulation verwendete Komponente kann dabei in verschiedenen Verhaltensmodellierungssprachen und auf verschiedenen Abstraktionsebenen implementiert werden. Die Idee ist nun, dass der Entwickler durch die Erfindung die Möglichkeit besitzt zu definieren, in welchen Zeitabschnitten der simulierten Zeit welche Simulationsebene für die Komponente zum Einsatz kommen soll, wann also z.B. eine langsame, detaillierte Simulationsebene benötigt wird und wann eine einfache, aber schnelle Simulationsebene für die Komponente ausreicht. Diese Erfindung kombiniert damit die Möglichkeit, auf hoher Abstraktionsebene (z.B. Systemebene) lange simulierte Zeiten zu erzielen mit der Möglichkeit, für einen definierten Abschnitt der simulierten Zeit die hohe Genauigkeit eines auf tiefer Ebene (z.B. physikalische Ebene) realisierten Simulationsmodells erzielen zu können.

Einige Forschungsgruppen beschäftigen sich mit Co-Simulation im Allgemeinen. Dabei sind diverse Co-Simulationsumgebungen entstanden, die es durch verschiedenste Methoden erlauben, unterschiedliche Abstraktionsebenen, Entwicklungssprachen und Simulatoren miteinander zu verbinden. So schlagen z.B. Bouchhima et al. ("A SystemC/Simulink Co-Simulation Framework for Continuous/Discrete-Events Simulation", Behavioral Modeling and Simulation Workshop, Proceedings of the 2006 IEEE International, pages 1-6, 2006) eine Co-Simulationsumgebung vor, die es erlaubt, SystemC- und Simulink-Modelle miteinander zu koppeln. Damit wird auch eine Verbindung zwischen zeitkontinuierlicher und zeitdiskreter Simulation geschaffen. Birrer et al. ("Incorporating SystemC in Analog/Mixed-Signal Design Flow. In Forum on Specification and Design Languages", Proceedings of the 8th International, pages 173-178, 2005) beschäftigen sich mit der Integrierung von SystemC Modellen in eine Verilog-A/AMS Simulation. Damit versuchen sie die Lücke zwischen Beschreibung des Systems auf Systemebene und seiner Hardwareimplementierung zu schließen. Ein anderer Ansatz für eine Co-Simulationsumgebung ist das HW/SW Co-Design Tool CISC SyAD ("System Architect Designer") (CISC Semiconductor. SyAD. CISC Semiconductor, Klagenfurt, Austria, Online Documentation, http://www.cisc.at/syad, 2009). Diese Umgebung ermöglicht es diverse Simulatoren sowohl aus der zeitdiskreten als auch der zeitkontinuierlichen Domäne miteinander zu verbinden. Eine ähnliche Umgebung ist CosiMate der Firma ChiasTek (ChiasTek Inc. CosiMate. ChiasTek Inc, Chicago, USA, Online Documentation, http://www.chiastek.com, 2009). Die vorliegende Erfindung erweitert den Stand der Technik dahingehend, dass eine Umschaltung zur Laufzeit auch für Komponentenmodelle in unterschiedlichen Verhaltensbeschreibungssprachen erfolgen kann.

Es existieren bereits Forschungsprojekte im Gebiet des Umschaltens zwischen verschiedenen Simulationsebenen. Die existierenden Projekte beschäftigen sich allerdings mit dem Umschalten zwischen Simulationsebenen implementiert in derselben zeitdiskreten Hardwarebeschreibungssprache und nicht mit sprachübergreifendem Umschalten (verschiedenen Hardwarebeschreibungssprachen und Abstraktionsebenen, zeitdiskret und auch zeitkontinuierlich) und den sich daraus ergebenden Problemen. Hines und Boriello demonstrieren in ihren Arbeiten ("Selective Focus as a Means of Improving Geographically Distributed Embedded System Co-Simulation", Proceedings of the 8th IEEE International Workshop on Rapid System Prototyping, pages 58-62, 1997) und ("Dynamic Communication Models in Embedded System Co-Simulation" Proceedings of the 34th Design Automation Conference, pages 395-400, 1997) einen Ansatz zur Verwendung von dynamischen Kommunikationsmodellen mittels des Tools "Pia". Dieses Tool erlaubt es dem Entwickler die Kommunikation zwischen einzelnen Komponenten mit unterschiedlichem Detailgrad zu spezifizieren. Dies ermöglicht es, für verschiedene Teile des Kommunikationssystems den verwendeten Detailgrad anzupassen. Es muss allerdings zwingend die von Hines/Boriello entworfene Designsprache "Pia" verwendet werden um die notwendigen Schnittstellen und Komponenten auf den unterschiedlichen Abstraktionsebenen zu beschreiben. Bei diesem Ansatz lassen sich nur die Abstraktionsebenen der Hardwareschnittstellen ändern und nicht komplette Modelle. Ein ähnlicher Ansatz wird auch von Yoo/Jerraya vorgeschlagen ("Hardware/Software Cosimulation from Interface Perspective", IEE Proceedings, Computers and Digital Techniques, 152(3):369-379, 2005) wo zwischen verschiedenen Abstraktionsebenen (in derselben Implementierungssprache) für eine Prozessorsimulation umgeschaltet werden soll. Die Autoren geben allerdings keine konkrete Lösung dafür, sondern definieren das Problem lediglich als mögliches Forschungsgebiet. Andere Autoren beschäftigen sich mit dem Umschalten zwischen verschiedenen Simulationsmodellen implementiert auf Transaktionsebene (TLM) in derselben Hardwarebeschreibungssprache. Radetzki et al. ("Accuracy-Adaptive Simulation of Transaction Level Models", Design, Automation and Test in Europe, 2008. DATE '08, pages 788-791, 2008.) zeigen eine SystemC basierte Lösung zum Umschalten zwischen verschiedenen SystemC-TLM Modellen zur Laufzeit. In Abhängigkeit vom momentanen Modellzustand wird ein Simulationsmodell gewählt. Ein ähnlicher Ansatz wird von Beltrame et al. ("Multi-Accuracy Power and Performance Transaction-Level Modeling. Computer-Aided Design of Integrated Circuits and Systems", IEEE Transactions on, 26(10):1830-1842, 2007.) verfolgt. Hier wird SystemC-TLM erweitert um SystemC-TLM Modelle verschiedener Genauigkeit zur Laufzeit verwenden zu können.

Das Patent DE 69631278 T2 beschreibt eine allgemeine Co-Simulationsmethodik. Es beinhaltet keinerlei Umschalten zwischen verschiedenen Simulationsmodellen zur Laufzeit. Im Patent US 7,191,111 B2 wird ein Weg beschrieben, einen Simulator zur Laufzeit zu deaktivieren. In der Zwischenzeit wird allerdings kein anderer Simulator für die jeweilige Komponente verwendet, sondern sie ist komplett deaktiviert. Das Patent US 7,146,300 beschreibt eine allgemeine Co-Simulationsmethodik und beinhaltet keinerlei Umschalten zwischen verschiedenen Simulationsmodellen zur Laufzeit. Das Patent US 7,069,204 beschreibt eine Methodik in Hinsicht auf Performance Hardware und Software zu modellieren. Es beinhaltet keinerlei Umschalten zwischen verschiedenen Simulationsmodellen zur Laufzeit. Das Patent US 5,870,588 umfasst eine allgemeine Co-Simulationsmethodik. Es beinhaltet keinerlei Umschalten zwischen verschiedenen Simulationsmodellen zur Laufzeit. In der internationalen Patentanmeldung WO 2007/025491 A1 wird eine Möglichkeit beschrieben, die Synchronisation zwischen verschiedenen Modellen einer Co-Simulation zu optimieren. Hier werden allerdings keine unterschiedlichen Simulationsmodelle für dieselbe Komponente verwendet, und es kann daher auch nicht zur Laufzeit das Simulationsmodell gewechselt werden. Die Patentanmeldung US 2007/0192079 A1 beschreibt eine zweistufige CPU Simulation. Jede Instruktion wird zuerst offline mit hoher Genauigkeit simuliert und das Ergebnis gespeichert. Während der gesamten Simulation wird anschließend ein abstraktes CPU-Verhalten modelliert, das auf die vorher berechneten Ergebnisse zurückgreift mit einer Art von Lookup-Table: effektiv gibt es also nur ein Simulationsmodell für die Komponente und das wird im Vorhinein vollständig "offline" berechnet. Dies ist allerdings nur möglich, weil es eine sehr begrenzte Anzahl verschiedener Instruktionen gibt. Es unterscheidet sich also wesentlich von der vorliegenden Erfindung.

Die Patentanmeldung US 2009/0063120 A1 beschreibt eine allgemeine Co-Simulationsmethodik bzw. Emulationsmethodik für die Kopplung von echter Hardware und Software. Dabei wird beschrieben, wie die Interaktion zwischen Hardware und Software durchgeführt wird. Weiters wird beschrieben, wie die Hardware zur Unterstützung der Simulation genutzt wird. Es beinhaltet keinerlei Umschalten zwischen verschiedenen Simulationsmodellen zur Laufzeit.

Das Dokument "SystemC-VHDL co-simulation and synthesis in the HW domain" (Bombana, M. et al.) beschreibt eine allgemeine Co-Simulationsmethodik zur Co-Simulation zwischen SystemC und VHDL. Es beinhaltet keinerlei Umschalten zwischen verschiedenen Simulationsmodellen zur Laufzeit.

Die Patentanmeldung EP 0 772 140 A1 beschreibt eine allgemeine HW/SW Co-Design Methodik unter Verwendung von Co-Simulation. Dabei wird ein Entwurfsprozess für ein System unter Verwendung von HW/SW Co-Design und Co-Simulation beschrieben. Es beinhaltet keinerlei Umschalten zwischen verschiedenen Simulationsmodellen zur Laufzeit.

Die vorliegende Erfindung überwindet die geschilderten Nachteile des Standes der Technik durch Bereitstellen eines Verfahrens zur Simulation von Komponenten unter Nutzung von Co-Simulation mit den Merkmalen des Anspruchs 1. Vorteilhafte Ausgestaltungen der Erfindung sind in den Unteransprüchen dargelegt.

Der Hauptvorteil dieser Erfindung ist die Möglichkeit, die Simulation in Intervalle hoher Genauigkeit und Intervalle mit niedriger Genauigkeit einzuteilen. Während Intervallen mit hoher Genauigkeit kommen rechenintensive und hochdetaillierte Simulationsmodelle zum Einsatz, während in Intervallen niedriger Genauigkeit einfachere, aber dafür schnellere Modelle verwendet werden. Die Performance der Co-Simulation wird durch die Möglichkeit des Umschaltens zur Laufzeit zwischen verschiedenen Simulationsmodellen für dieselbe Komponente enorm verbessert. Dadurch wird für komplexe Systeme überhaupt erst die Simulation eines ausreichend großen simulierten Zeitraumes mit vertretbarer Simulationszeit möglich. In dieser Erfindung wird daher vorgeschlagen, dynamisch zur Laufzeit der Co-Simulation zwischen verschiedenen Simulationsmodellen und Abstraktionsebenen für eine Komponente umzuschalten. Durch die dadurch wesentlich verkürzte Simulationszeit wird der Entwickler in die Lage versetzt, das gesamte System über eine lange simulierte Zeit zu beobachten und gleichzeitig aber einen Zeitraum zu definieren, in dem die erzielte Simulationsgenauigkeit massiv erhöht wird. Das System kann also mit einem schnellen und ungenauen Simulationsmodell unter normalen Umständen simuliert werden, während zum Zeitpunkt des Auftretens besonderer Effekte (z.B. hinsichtlich elektromagnetischer Verträglichkeit) auf ein hochdetailliertes Simulationsmodell der Komponente umgeschaltet wird, um eine bessere Genauigkeit der Ergebnisse zu erzielen.

Ein weiterer Punkt der Erfindung umfasst das automatisierte Umschalten zwischen verschiedenen Simulationsmodellen für dieselbe Komponente. Durch Vorgabe bestimmter, einstellbarer Kriterien wie Verwendungsgrad des Komponentenmodells (d.h. wird eine Komponente derzeit überhaupt angewendet) oder vorausberechnete Abweichung der Genauigkeiten der Modelle für eine gegebene Komponente wird automatisiert zwischen den verschiedenen Simulationsmodellen zur Laufzeit gewechselt. Wird also beispielsweise anhand der Parameter erkannt, dass nun eine besonders kritische Phase erreicht wird, wird automatisch auf das dafür geeignete hochdetaillierte Simulationsmodell umgeschaltet. Ein Verlassen des kritischen Bereichs wird ebenso erkannt und damit automatisiert wieder auf ein schnelleres, aber ungenaueres Simulationsmodell gewechselt, um so die Gesamtsimulationszeit so kurz wie möglich zu halten, aber gleichzeitig in besonders interessanten Simulationsintervallen eine möglichst hohe Simulationsgenauigkeit zu erzielen.

Eine detaillierte Beschreibung der Erfindung wird beispielhaft anhand von Zeichnungsfiguren durchgeführt. In diesen Figuren zeigen:
Fig. 1 eine Darstellung des erfindungsgemäßen Prinzips des Umschaltens zwischen verschiedenen Simulationsmodellen für eine Komponente zur Laufzeit in einer heterogenen Co-Simulationsumgebung;
Fig. 2 die interne und externe Ansicht auf die Komponente gemäß Fig. 1 mit verschiedenen Simulationsmodellen, zwischen denen zur Laufzeit umgeschaltet wird;
Fig. 3 ein Zeitdiagramm, das den Zusammenhang für die Komponente mit verschiedenen Simulationsmodellen zwischen Abstraktionsebene, Simulationsgeschwindigkeit und erzielbarer Simulationsgenauigkeit nach außen hin darstellt; und
Fig. 4 ein Beispiel für eine Co-Simulation eines FlexRay Netzwerks unter Anwendung der vorliegenden Erfindung.

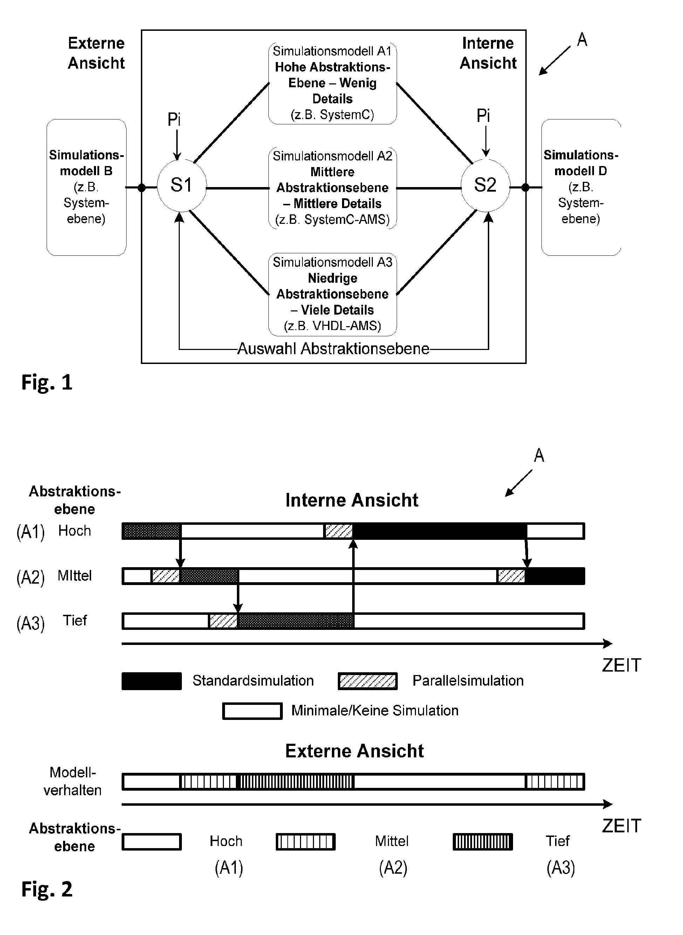

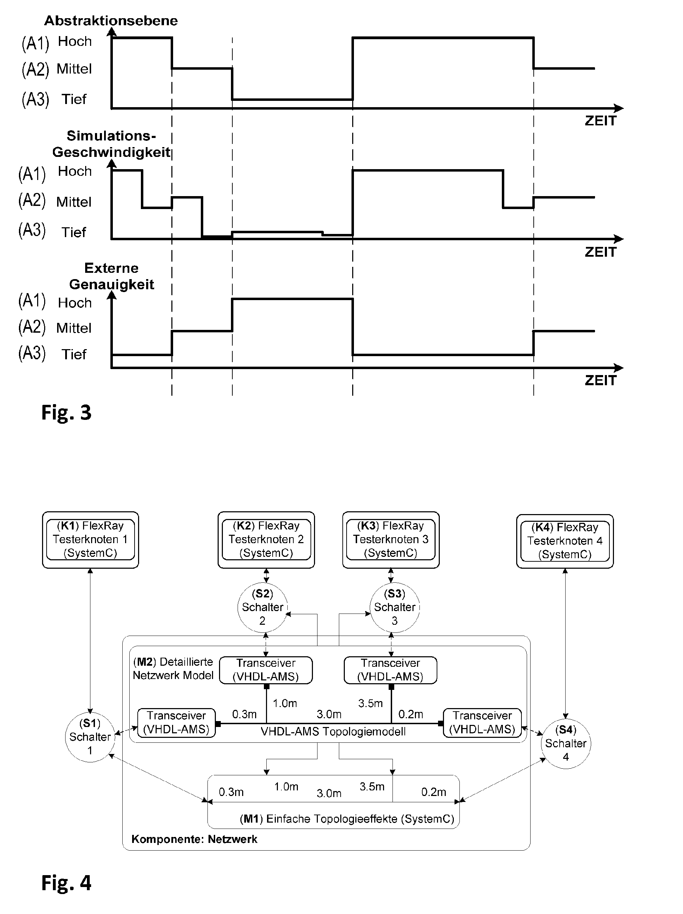

In Fig. 1 ist beispielhaft das erfindungsgemäße Prinzip des Umschaltens zwischen verschiedenen Simulationsmodellen (sowohl Hardware, Software, oder gemische Ausführungsform) für eine Komponente A (z.B. physikalische Ebene eines Netzwerks, wie in Fig. 4 dargestellt) zur Laufzeit in einer heterogenen Co-Simulationsumgebung dargestellt. Die drei Blöcke in der Mitte repräsentieren dabei die verschiedenen Simulationsmodelle A1 bis A3 für die Komponente A, zwischen denen zur Laufzeit umgeschaltet werden kann. Die Simulationsmodelle A1 bis A3 repräsentieren unterschiedliche Simulationsebenen. Die Komponenten B und D stehen dabei auszugsweise für die restlichen Komponenten (z.B. Softwareapplikation und Umwelt, wie in Fig. 4 verdeutlicht) des zu simulierenden Systems. Die beiden Blöcke S1 und S2 sind dafür zuständig, dass für die Komponente A jeweils auf das richtige Simulationsmodell A1 - A3 umgeschaltet wird und dienen in weiterer Folge als Schnittstelle zur restlichen Co-Simulation (Funktionsprinzip eines Multiplexers bzw. DeMultiplexers). Darüber hinaus sind sie für die Synchronisierung der verwendeten Simulationsmodelle A1-A3 zuständig (rechtzeitige Aktivierung eines Simulationsmodells einer Komponente vor der Umschaltung auf ein anderes Simulationsmodell zur Synchronisierung des internen Modellzustandes). Sie führen auch die automatisierte Auswahl der jeweils geeigneten Modellabstraktionsstufe, basierend auf definierbaren Kriterien Pi, wie Verwendungsgrad des Komponentenmodells (d.h. wird eine Komponente derzeit überhaupt angewendet) oder vorausberechnete Abweichung der Genauigkeiten der Modelle für eine gegebene Komponente durch. Damit stellen sie einen wesentlichen Punkt der Erfindung dar.

Die Simulationsmodelle einer gegebenen Komponente A1 bis A3 können unterschiedliche Komplexität aufweisen und sind unabhängig von der Verhaltensmodellierungssprache. Im Fall von unterschiedlicher Verhaltensmodellierungssprache wird das Prinzip der Co-Simulation angewendet (d.h. Einbindung von mehreren Simulationssprachen in ein Simulationsframework für die gesamtheitliche Simulation eines Systems mit heterogenen Komponenten).

Fig. 2 zeigt die interne und externe Ansicht auf die Komponente A, die die verschiedenen Simulationsmodelle A1, A2, A3 umfasst, zwischen denen zur Laufzeit umgeschaltet wird. Der obere Teil von Fig. 2 zeigt die internen Abläufe während der Simulation, die das Umschalten betreffen. Es wird gezeigt, wie zwischen den verschiedenen Simulationsebenen (Hoch, Mittel, Tief), in den Figuren als Abstraktionsebenen bezeichnet, gewechselt wird. Dabei ist jeweils eine kurze Phase nötig, in der das als nächstes zu verwendende Simulationsmodell A1, A2, A3 parallel zum momentan laufenden Simulationsmodell A1, A2, A3 ausgeführt wird, bevor ein Umschaltvorgang zwischen den beiden Simulationsmodellen stattfindet. Dies ist notwendig, um die beiden Modelle miteinander zu synchronisieren. Eine andere Synchronisierungsmöglichkeit ist, dass dem nachfolgenden Simulationsmodell der für ein nahtloses Umschalten notwendige interne Zustand von extern eingeprägt wird, bevor das Umschalten zwischen den Simulationsmodellen stattfindet. Dies muss aber durch das Simulationsmodell unterstützt werden. Der untere Teil von Fig. 2 zeigt die externe Ansicht auf die Komponente A, wenn als Synchronisierungsvariante Parallelsimulation eingesetzt wird. Dabei ist ersichtlich, dass der Übergang zwischen den verschiedenen Simulationsmodellen von außen betrachtet nahtlos geschieht, die Parallelberechnung also außerhalb der Komponente A nicht erkennbar ist.

Fig. 3 stellt ein Zeitdiagramm dar, in dem für die verschiedenen Simulationsmodelle A1, A2, A3 der Komponente A der Zusammenhang zwischen Abstraktionsebene, Simulationsgeschwindigkeit und erzielbarer Simulationsgenauigkeit nach außen hin dargestellt ist. Dabei ist ersichtlich, dass eine niedrige (tiefe) Abstraktionsebene der Komponente A (d.h. es läuft das Simulationsmodell A3 der Komponente A) eine geringe Simulationsgeschwindigkeit und hohe Simulationsgenauigkeit der Komponente bewirkt. Dasselbe gilt auch umgekehrt: eine hohe Abstraktionsebene (d.h. es läuft das Simulationsmodell A1 der Komponente A) führt zu hoher Simulationsgeschwindigkeit, aber niedriger Simulationsgenauigkeit der Komponente. Weiter ist zu sehen, dass durch die Phase der Parallelberechnung (siehe Figur 2) die Simulationsgeschwindigkeit während der Parallelberechnung absinkt.

Fig. 4 zeigt ein Beispiel für eine Co-Simulation eines FlexRay Netzwerks (Komponente: Netzwerk) unter Einsatz der Erfindung. Dabei wird das Modell M2 für die Komponenten Netzwerktopologie (VHDL-AMS Topologiemodell, inklusive Kabel) und Transceiver (Transceiver VHDL-AMS) je nach Bedarf zur Laufzeit zwischen hochdetaillierten, aber langsamen VHDL-AMS Simulationsmodellen und einem schnellen, aber ungenauen SystemC Simulationsmodell M1 (Einfache Topologieeffekte (SystemC)) umgeschaltet.

Die FlexRay Testerknoten K1 bis K4 in SystemC liefern dabei die Stimuli für das Netzwerk und analysieren das Ausgabeverhalten des Netzwerkes. Die Schalter S1 bis S4 sind für ein 2-zu-1 Multiplexing zwischen Netzwerk und entsprechende FlexRay Testerknoten K1 bis K4 zuständig und gewährleisten zusätzlich die Synchronisierung der verwendeten Simulationsmodelle M1 und M2 während des Umschaltprozesses.

## Patentansprüche

1. Verfahren zur Simulation von Komponenten unter Nutzung von Co-Simulation, **dadurch gekennzeichnet, dass** zumindest eine Komponente (A) in unterschiedlichen Simulationsebenen, die unterschiedliche Detailtiefen aufweisen, modelliert wird, die Modellierung der zumindest einen Komponente (A) durch zumindest zwei verschiedene Verhaltensmodellierungssprachen erfolgt, und die Umschaltung der Simulationsebenen für zumindest eine Komponente (A) zur Laufzeit der Simulation erfolgt.

2. Verfahren nach Anspruch 1, **dadurch gekennzeichnet, dass** eine Zuordnung der zu verwendenden Simulationsebene für zumindest eine Komponente (A) für einen vorgegebenen Zeitabschnitt der zu simulierenden Zeit vom Benutzer definiert wird.

3. Verfahren nach Anspruch 1, **dadurch gekennzeichnet, dass** eine Umschaltung der zu verwendenden Simulationsebene zumindest einer Komponente (A) ereignisgesteuert durch definierte Kriterien, wie z.B. ob eine Komponente derzeit überhaupt angewendet wird bzw. der Verwendungsgrad des Komponentenmodells, oder vorausberechnete Abweichung der Genauigkeiten der Modelle für eine gegebene Komponente, erfolgt.

4. Verfahren nach Anspruch 3, **dadurch gekennzeichnet, dass** der Wechsel zwischen den Simulationsebenen mit Hilfe während der Laufzeit automatisiert ausgewerteter Kriterien erfolgt.

5. Verfahren nach einem der vorangegangenen Ansprüche, **dadurch gekennzeichnet, dass** beim Wechsel zwischen verschiedenen Simulationsebenen vorübergehend das als nächstes zu verwendende Simulationsmodell (A1, A2, A3) parallel zum momentan laufenden Simulationsmodell (A1, A2, A3) betrieben wird.

6. Verfahren nach einem der Ansprüche 1 bis 4, **dadurch gekennzeichnet, dass** beim Wechsel zwischen verschiedenen Simulationsebenen dem nachfolgenden Simulationsmodell (A1, A2, A3) der für ein nahtloses Umschalten notwendige interne Zustand von extern eingeprägt wird, bevor das Umschalten zwischen den Simulationsmodellen stattfindet.
